(19) Europäisches Patentamt / European Patent Office / Office européen des brevets

(11) **EP 3 467 338 A1**

(12) **EUROPEAN PATENT APPLICATION**

(43) Date of publication:
**10.04.2019  Bulletin 2019/15**

(51) Int Cl.:
*F16F 15/00* (2006.01)   *F16F 15/32* (2006.01)
*F16C 32/04* (2006.01)   *G01M 1/22* (2006.01)

(21) Application number: **17195470.4**

(22) Date of filing: **09.10.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Mecos AG**
**8005 Zürich (CH)**

(72) Inventors:
• STETTLER, Robert
  8180 Bülach (CH)
• AESCHLIMANN, Beat
  8400 Winterthur (CH)
• BÜHLER, Philipp
  8006 Zürich (CH)

(74) Representative: **Detken, Andreas**
**Isler & Pedrazzini AG**
**Giesshübelstrasse 45**
**Postfach 1772**
**8027 Zürich (CH)**

(54) **BALANCING A ROTOR IN A MAGNETIC BEARING DEVICE**

(57)    A method of balancing a rotor (1) that is supported for rotation around a rotation axis (A) by an active magnetic bearing device is disclosed. Displacement signals for the rotating rotor are determined, and the electromagnets (3) of the magnetic bearing device are operated so as to generate rotor-synchronous rotating force ($F_w$) in such a manner that the rotor-synchronous rotating force reduces a rotor-synchronous component of the displacement signals. Based on operating parameters of the magnetic bearing device, characteristics of the rotor-synchronous rotating force are determined, and based on these characteristics, a change of mass distribution of the rotor is determined so as to improve balancing of the rotor.

FIG. 2

EP 3 467 338 A1

**Description**

TECHNICAL FIELD

The present invention relates to a method of balancing a rotor in a magnetic bearing device, and to a magnetic bearing device configured to carry out such a method.

PRIOR ART

Unbalance occurs whenever the principal axis of inertia of a rotor does not coincide with its geometric axis. Unbalance can cause undesired effects, in particular, undesired vibrations. It is therefore often desired to balance the rotor.

Traditionally, a rotor is balanced by determining the unbalance and adding material ("correction masses") to the rotor or removing material from the rotor to decrease the amount of unbalance. Balancing is often an iterative procedure, several iterations being needed for obtaining a residual unbalance that is below an acceptable level.

For many types of rotors, balancing machines have been devised for indicating the amount and location of the correction masses. For instance, balancing machines are widely employed for balancing the wheels of automobiles. However, for large and heavy rotors that are designed to spin at high rotation frequencies, for instance rotors of gas turbines or large turbochargers, suitable balancing machines often do not exist. If a balancing machine exists, the rotor can often be rotated in the balancing machine only at rotation frequencies that are much lower than the nominal rotation frequency during operation. However, the unbalance behavior can strongly depend on the rotation frequency due to bending modes of the rotor that are excited only at elevated rotation frequencies, and the results obtained in a balancing machine can therefore be unsatisfactory. In some cases, large rotors are even assembled directly within a machine during installation, and only parts of the rotor can then be pre-balanced before installation. Therefore, in many cases balancing under realistic operating conditions can be carried out only once the rotor has been installed in its final working position.

In such cases balancing can be a difficult and expensive operation. Often there is insufficient accessibility to the rotor in the machine in order to add or remove the correction masses. Furthermore, the balancing operation can be very time-consuming and, in the case of large rotors, can require large amounts of energy. For instance, a single balancing iteration for a large gas turbine can take several hours and can require the presence of several technicians. To make things worse, the process cannot be reliably planned because it is initially unknown how many iterations are needed for achieving an acceptable level of residual unbalance.

Rapidly rotating rotors are often supported in a contactless manner by active magnetic bearings (AMBs). AMBs provide possibilities for actively controlling the system's response to unbalance. For instance, it is possible to cause the rotor to rotate about its principal axis of inertia, or to force the rotor to rotate about its geometrical axis. An overview over such schemes is provided, e.g., in G. Schweitzer et al. (ed.), "Magnetic Bearings - Theory, Design and Application to Rotating Machinery" (2009), ISBN 978-3-642-00497-1, chapter 8.3. In particular, this document discloses three groups of unbalance control strategies. One of these groups involves a cancellation or rejection of rotor-synchronous bearing reaction forces. An example is "Unbalance Force Rejection Control" (UFRC) as discussed in chapter 8.3.3 of the above-mentioned document. When UFRC is applied, the rotor will rotate in the magnetic bearing device essentially about its principal axis of inertia rather than about its geometrical axis, and rotor-synchronous bearing forces will essentially be absent.

While such schemes may help in achieving satisfactory overall performance of the rotary machine, they do not address root of the problem, i.e., they do not remove the unbalance itself.

For actually removing the unbalance, it is known from the prior art to determine unbalance parameters of a rotor by carrying out measurements of the rotor while it is rotated in the magnetic bearings, and to balance the rotor based on such measurements.

DE 10 2010 063 812 A1 discloses a method for balancing a shaft of a rotating machine, the shaft being supported by active magnetic bearings. The shaft is rotated, and radial displacements of the shaft are measured. From the measured displacements, unbalance parameters are determined for characterizing the unbalance of the shaft, and equalization parameters are determined therefrom for equalizing the unbalance. Based on the equalization parameters, the rotor is then balanced by removing material from the shaft or adding material to the shaft.

DE 42 27 014 A1 discloses another method for balancing a rotor suspended by active magnetic bearings. Unbalance is detected by measuring the currents through the electromagnets of the bearings. The magnitude and position of the unbalance is determined and displayed. Subsequently, the unbalance is corrected manually, and the residual unbalance is determined. The residual unbalance is then compensated using rotation-angle dependent control values for the magnet currents.

Such methods can be unsatisfactory in some situations, in particular, when rapidly spinning rotors are involved. In particular, such methods can require a large number of iterations before an acceptable level of residual unbalance is obtained, thus markedly increasing the installation costs of rotating systems involving such rotors.

SUMMARY OF THE INVENTION

It is an object of the present invention to provide a method for balancing a rotor supported by magnetic bearings, the method being suited for rapidly spinning, large rotors, being accurate and requiring a low number of iterations.
The object is achieved by a method according to claim 1. Further embodiments of the invention are laid down in the dependent claims.
In a first aspect, the present invention provides a method of balancing a rotor that is supported for rotation around a rotation axis in a contactless manner by an active magnetic bearing device comprising a plurality of electromagnets. The method comprises:

(a) rotating the rotor in the magnetic bearing device at a rotation frequency;
(b) determining displacement signals for the rotating rotor in at least one sensor plane;
(c) operating the electromagnets of the magnetic bearing device so as to cause a rotor-synchronous rotating force in at least one bearing plane in such a manner that the rotor-synchronous rotating force reduces a rotor-synchronous component of the displacement signals;
(d) based on operating parameters of the magnetic bearing device, determining characteristics of the rotor-synchronous rotating force; and
(e) based on the characteristics of the rotating force, determining a change of mass distribution of the rotor so as to improve balancing of the rotor.

In this method, displacement signals are determined, and the magnetic bearing device is controlled in such a manner that the rotor-synchronous component of the displacement signals, which is indicative of unbalance, is reduced or ideally minimized. In other words, the "unbalance component" of the displacement signals is reduced. This can be achieved, e.g., by deliberately causing the controller of the magnetic bearing device to create an additional rotor-synchronous rotating force acting upon the rotor and controlling the magnitude and phase of this force with the control goal of reducing rotor-synchronous displacements. However, other control schemes are possible. Regardless of the control scheme, eventually a rotor-synchronous rotating force acting upon the rotor is generated by the magnetic bearing device. The rotating force emulates the effect of a changed mass distribution of the rotor, causing the rotor to rotate in the same manner as if the mass distribution had already been changed. The corresponding rotating force is quantified, and the required change of mass distribution is determined on this basis.
A key advantage of this balancing procedure is that the rotor rotates in essentially the same manner (or at least in a similar manner) both <u>during</u> the balancing operation and <u>after</u> the balancing operation. Detrimental effects that might originate from changes between the movements of the rotor before and after balancing can thereby be avoided or at least reduced. In particular, any gas flow around the rotor caused by its rotation will be the same or at least similar before and after balancing. In this context, it is to be noted that an unbalanced rotor rotating about its principal axis of inertia within a housing (e.g., under the action of a control scheme for cancelling or rejecting rotor-synchronous bearing forces, such as UFRC) may cause an uneven gas flow along the circumference of the rotor. Such an uneven gas flow may create a temperature gradient along the circumference of the rotor, which in turn may cause bending deformations. Such bending deformations may again change the unbalance. It may therefore be difficult if not impossible to correctly balance a rotor in a single run based on displacement signals obtained during rotation about the principal axis of inertia. By generating a rotating force that emulates the effect of the changed mass distribution, deformations due to an uneven gas flow can be avoided, and much more precise balancing becomes possible. The number of balancing iterations can thereby be markedly reduced.
While the proposed method can be used for balancing any rotor that is supported by magnetic bearings, regardless of whether the rotor is long or short, small or large or whether it is slowly or rapidly spinning, the method is particularly advantageous if applied to relatively large, rapidly spinning rotors such as in gas turbines or turbochargers, where bending modes are important and where more traditional balancing methods can be excessively time-consuming. In particular, it is advantageous to carry out the method while the rotor is rotated at its nominal rotation frequency.
If the rotor is essentially rigid, satisfactory results can often be achieved by carrying out the method at a single rotation frequency. However, often the unbalance will depend on the operating conditions, in particular, rotation frequency, motor power, gas pressure, ambient temperature etc. For instance, heating of the rotor by an electric motor can cause the rotor to bend, or rotating the rotor at different rotation frequencies can lead to the excitation of bending modes that influence the unbalance distribution. It can therefore be advantageous to carry out the method at a plurality of different operating conditions, in particular, at multiple rotation frequencies, and to base the change of mass distribution on the rotating forces determined at these different operating conditions. To this end, steps (a)-(d) can be repeated at a plurality of operating conditions, in particular, at a plurality of rotation frequencies, and the change of mass distribution of the rotor, possibly in multiple balancing planes, can be determined based on the characteristics of the rotating forces at the plurality of operating conditions, thereby obtaining improved balancing over a wider range of operating conditions.

Preferably, in step (c) the electromagnets of the magnetic bearing device are operated in such a manner that the unbalance component of the displacement signals is not only reduced, but actually minimized, i.e., reduced as close to zero as possible. However, this may not always be possible due to operational restrictions. In this case, it may be sufficient to merely reduce the unbalance component by a certain amount, e.g., by 50%, and to determine the change of mass distribution based on the rotating force required to achieve this reduction.

In advantageous embodiments, the rotating force is determined for a stationary state of the rotor, in particular, for a state in which the rotor has reached thermal equilibrium. To this end, it is possible to operate the magnetic bearing device in accordance with step (c), i.e., under the action of the rotating force, for a period of time that is sufficiently long for the rotor to achieve thermal equilibrium, before carrying out steps (d) and (e). However, this period of time may be unknown or unreasonably long. It is therefore suggested to observe a time dependence of at least one operation parameter of the magnetic bearing device, the operation parameter being indicative of the rotating force, and, based on said time dependence, estimating characteristics of the rotating force in a stationary state. The change of mass distribution can then be based on the estimated characteristics of the rotating force in the stationary state. In particular, it is possible to observe the time dependence only for a limited amount of time that is shorter than the time needed for reaching the stationary state and extrapolating the rotating force in the stationary state from these observations. In this manner, the balancing operation can be accelerated without sacrificing accuracy.

If the bearing planes defined by the electromagnets do not coincide with the balancing planes, the rotating force can be transformed from the bearing planes into the balancing planes, and the determination of the material to be added or removed can be based on such transformation. In particular, step (e) can comprise a substep (e1) of determining a balancing force in at least one balancing plane based on the rotating force in the at least one bearing plane. The change of mass distribution of the rotor can then be based on the balancing force in the at least one balancing plane.

In some embodiments, the rotating force cannot be determined directly. In such cases, it is possible to determine the characteristics of the rotating force based on operation parameters such as flux densities generated by the electromagnets and/or currents through the electromagnets, possibly taking into account further quantities such as the displacement signals of the rotor and the voltage across the electromagnets.

A change of mass distribution in order to balance the rotor can be achieved in various ways, for instance by adding or removing material, by changing the location and/or orientation of different rotor portions relative to one another (or, in more general terms, displacing material that is already present on the rotor), or by deforming the rotor (e.g., bending the rotor). Accordingly, the determination of a change of mass distribution in step (e) can include at least one of

(i) determining an amount and location of material to be added to the rotor;
(ii) determining an amount and location of material to be removed from the rotor; and
(iii) determining an amount and location of material to be displaced on the rotor; and
(iv) determining an amount and location of deformation of the rotor.

The balancing operation can be completed by actually carrying out the change of mass distribution as determined in step (e).

In another aspect, the present invention provides an active magnetic bearing device comprising a plurality of electromagnets and a controller for generating control currents through the electromagnets, the controller being configured to carry out a method as described above.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1    shows a highly schematic sketch illustrating an active magnetic bearing device supporting a rotor that exhibits unbalance;

Fig. 2    shows a highly schematic sketch illustrating the active magnetic bearing device of Fig. 1 generating a rotation-synchronous rotating force upon the rotor, the rotating force minimizing displacement signals;

Fig. 3    shows a highly schematic sketch illustrating the active magnetic bearing device of Fig. 1 after the rotor has been balanced;

Fig. 4    shows a highly schematic sketch illustrating some aspects of the interaction of an electromagnet with the rotor;

Fig. 5    shows a highly schematic sketch illustrating an active magnetic bearing device supporting a rotor in a side view, together with the first three bending modes of the rotor;

Fig. 6    shows a schematic diagram illustrating a time dependence of unbalance signals; and

Fig. 7    shows a flow diagram of an embodiment of a balancing method.

DESCRIPTION OF PREFERRED EMBODIMENTS

Principle of operation

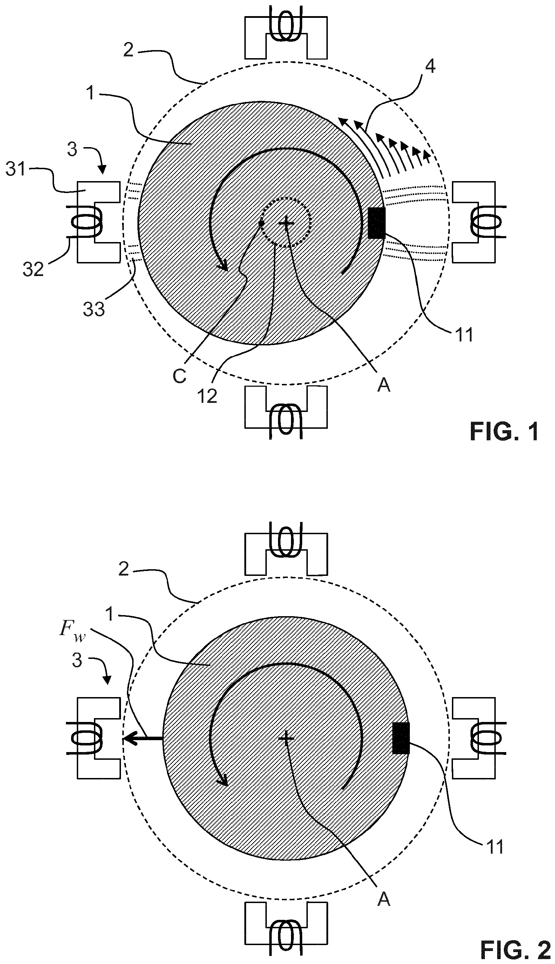

Figure 1 illustrates, in a highly schematic manner, an active magnetic bearing device in which a rotor 1 is supported in a contactless manner by a plurality of electromagnets 3. Each electromagnet is illustrated in a highly simplified manner in the form of a coil 32 wound around a U-shaped core 31. As will be apparent to a person skilled in the art, much more sophisticated schemes are known for arranging the electromagnets of a radial magnetic bearing, and the present invention can be applied with any such arrangement. Further, only a single radial bearing comprising two pairs of mutually opposing electromagnets 3 in a common radial bearing plane is illustrated in Fig. 1, and in the following the principles of the present invention will first be discussed in conjunction with such a single radial bearing. However, as will be apparent to a person skilled in the art, the present invention is not limited to radial bearings and can be applied to any active magnetic bearing arrangement. For instance, a complete bearing device may comprise at least one further radial bearing in a second bearing plane as well as an axial bearing, and the principles of the present invention can be applied to any of these bearings. In particular, the method of the present invention can be simultaneously applied to multiple radial bearing planes so as to compensate for both static and dynamic unbalance. Instead of purely radial and axial bearings, so-called conical bearings creating both axial and radial force components can be employed.

Each electromagnet creates a magnetic flux 33 through its core 31 and through the rotor 1, the flux 33 crossing the gap between the core 31 and the rotor 1, thereby creating an attractive force between the electromagnet 3 and the rotor 1. In an active magnetic bearing device, the position of the rotor between the electromagnets is determined and used for controlling the electromagnets so as to keep the rotor in its desired position. The position can be determined by suitable displacement sensors or by measuring the inductance of the electromagnets 3, which depends on the gap between the core of the electromagnet and the rotor surface.

The magnetic bearing device comprises a housing 2, which is only schematically indicated by a dashed line. The rotor 1 rotates about a rotation axis A within the housing 2.

The rotor 1 exhibits a certain degree of static and/or dynamic unbalance. For simplifying the discussion, in Fig. 1 it has been assumed that the rotor 1 can be modelled by a fictitious rotor that is perfectly balanced plus a single additional mass 11 arranged on the circumference of the rotor in the illustrated bearing plane. As a result of the unbalance, the principal axis of inertia of the rotor 1 does not coincide with its geometric axis C. Rotation around the principal axis of inertia will cause the point of intersection of the geometric axis C with the bearing plane to describe an orbit 12 about the principal axis of inertia, which coincides with the rotation axis A. In Fig. 1, the magnitude of this orbit is greatly exaggerated. As a result, the rotor appears to wobble around the rotation axis.

In this simplified model, the distance of the rotor surface to any particular displacement sensor or electromagnet will be at a maximum when the displacement sensor or electromagnet faces the additional mass 11, and it will be at a minimum when the displacement sensor or electromagnet faces the surface portion diametrically opposite from the additional mass 11. Therefore, as a consequence of the unbalance, each displacement signal will exhibit a periodical, sinusoidal variation at the rotation frequency with the same amplitude but different phase, the phase depending on the angular position of the displacement sensor or of the electromagnet that records the displacement signal. In other words, the displacement signals that are due to unbalance can be considered to rotate about the rotation axis at the rotation frequency of the rotor and in the same direction as the rotor - they are rotor-synchronous and describe an orbit around the rotation axis. For instance, if two displacement sensors are arranged at a distance of 90° around the rotation axis, both sensors will record a sinusoidal variation at the rotation frequency with the same amplitude, but with a phase difference of 90°. In the following, the component of the displacement signals that rotates about the rotation axis at the rotation frequency of the rotor will also be called the "unbalance component".

The unbalance component can be readily determined by methods that are well-known to a person skilled in the art, e.g., by the use of selective filtering or by a Fourier analysis.

A possible implementation of selective filtering is disclosed in WO 2006/010285 A1, where a possible hardware implementation of a suitable filter with two coupled integrators is described.

Fourier analysis can be carried out as follows. The unbalance component of the displacement signals can be determined by calculating:

$$x_u = \langle x(t) \exp(-j\omega t) \rangle_t$$

and/or

$$y_u = \langle y(t) \exp(-j\omega t)\rangle_t$$

where $t$ designates time, $x(t)$ designates time-dependent displacement signals along the x axis, $y(t)$ designates time-dependent displacement signals along the y axis, $j$ designates the imaginary unit with $j^2 = -1$, $\omega = 2\pi f$ designates angular velocity, $f$ is the rotation frequency, $\langle.\rangle_t$ designates an average over time, the averaging period being much larger than the rotation period $1/f$, and $x_u$ and $y_u$ are complex quantities that designate the unbalance component of the displacement signals along the x and y axis, respectively. In a symmetric system, if the displacement sensors are properly calibrated, then $y_u = jx_u$ or $y_u = -jx_u$, depending on the sense of rotation. The magnitude of $x_u$ or, equivalently, $y_u$ characterizes the amplitude of the unbalance signal, and the phase of $x_u$ or $y_u$ characterizes the phase of the unbalance signal.

As illustrated in Fig. 2, in the presently proposed scheme, the electromagnets 3 are controlled in such a manner that the unbalance component of the displacement signals is minimized or at least reduced. The radius of the orbit 12 of the geometric center of the rotor is thus minimized or at least reduced. As a result of this control scheme, the electromagnets 3 generate a rotor-synchronous radial force $F_w$ that rotates about the rotation axis A so as to counteract the rotating radial force caused by the unbalance. In the simplified model of Fig. 2, the rotor-synchronous radial force $F_w$ counteracts the centrifugal force caused by the additional mass 11. As a result, the geometric axis of the rotor 1 will now coincide with its principal axis of inertia and with the rotation axis A, or it will at least be closer to the rotation axis, and the rotor will therefore rotate as if it were perfectly or at least better balanced. The amplitude and phase of the rotor-synchronous radial force $F_w$ are then determined.

The rotor-synchronous radial force can be determined in a similar manner as the unbalance component of the displacement signals by calculating time averages of the actual bearing forces as follows:

$$F_{wx} = \langle F_x(t) \exp(-j\omega t)\rangle_t$$

and/or

$$F_{wy} = \langle F_y(t) \exp(-j\omega t)\rangle_t$$

where $F_x(t)$ designates the time-dependent bearing force along the x axis, $F_y(t)$ designates the time-dependent bearing force along the y axis, and $F_{wx}$ and $F_{wy}$ are complex quantities that characterize the rotor-synchronous radial force $F_w$. In a symmetric system, $F_{wy} = jF_{wx}$ or $F_{wy} = -jF_{wx}$, depending on the sense of rotation. The magnitude of $F_{wx}$ or, equivalently, $F_{wy}$ characterizes the amplitude of the unbalance signal, and the phase of $F_{wx}$ or $F_{wy}$ characterizes the phase of the unbalance signal.

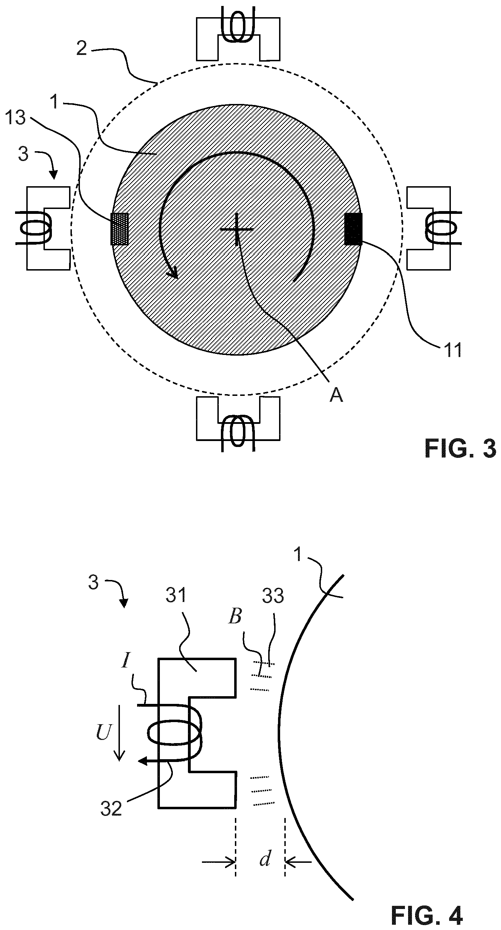

As illustrated in Fig. 3, a correction mass 12 of value $m_C$ can be determined from the rotating force $F_w$ and mounted on the rotor so as to generate a centrifugal force that matches the radial force $F_w$. In this manner, the rotor can be perfectly balanced.

Generation of the rotating force

The rotating force $F_w$ can be generated as follows: The controller of the magnetic bearing device receives a signal that indicates the angular position of the rotor, e.g., a pulse signal or an angular signal. Based on this signal, the controller generates a sinusoidal signal at the rotation frequency. For each electromagnet in the same bearing plane, the sinusoidal signal is appropriately phase-shifted by the angle at which the electromagnet is located, amplified and fed to the electromagnet to create a rotating radial magnetic force upon the rotor, the magnetic force rotating about the rotation axis at the rotation frequency. The amplitude and the phase of the sinusoidal signal are then controlled in such a manner that the component of the displacement signals that rotates about the rotation axis at the rotation frequency (i.e., the unbalance signal) is minimized.

Various methods for controlling the amplitude and phase of the sinusoidal signal are known in the literature, see, e.g., the above-mentioned document G. Schweitzer et al. (ed.), "Magnetic Bearings - Theory, Design and Application to Rotating Machinery" (2009), ISBN 978-3-642-00497-1, chapter 8.3. A preferred method is an unbalance controller based on the dynamic compliance of the magnetic bearing. In this manner, the controller will be stable under all operating conditions.

Generalization to multiple sensor and bearing planes

In the above discussion, only a single sensor plane was considered. In general, however, the displacements are determined in multiple sensor planes along the rotation axis, bearing forces are applied in multiple bearing planes along the rotation axis, and unbalance masses are added, removed or shifted in multiple balancing planes along the rotation axis. The sensor planes, the bearing planes and the balancing planes do not need to coincide. However, in practice, the number of balancing planes will often be the same as the number of bearing planes and the number of sensor planes.

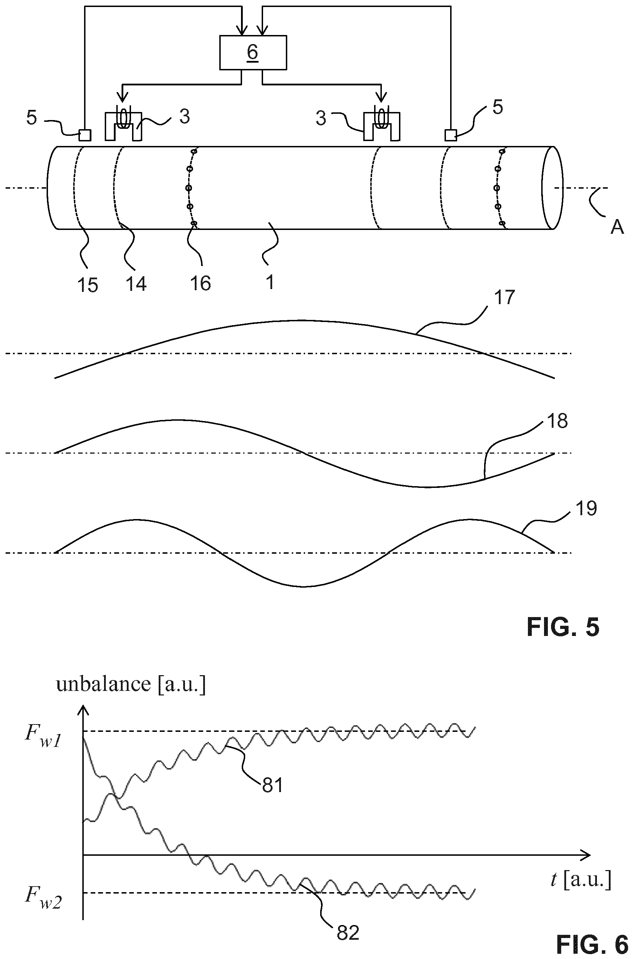

An example is illustrated in Fig. 5. In this example, an elongated rotor 1 is supported by radial magnetic bearings formed by electromagnets 3 in two bearing planes 14 at different positions along the rotation axis A. Radial displacements are determined by displacement sensors 5 arranged in two sensor planes 15 at different positions along the rotation axis A. A controller 6 receives signals from the displacement sensors 5 and generates control currents in the electromagnets 3, the control currents causing rotor-synchronous rotating forces in both bearing planes. Correction masses are added or removed in two balancing planes 16 at different positions along the rotation axis A to correct for static and dynamic unbalance.

Mathematical description for general case

In general the unbalance generates an unbalance force vector $F_u$ along the length of the rotor, the elements of the unbalance force vector corresponding to the unbalance forces in the multiple bearing planes. Since the magnetic bearing has limited stiffness, these forces cause unbalance displacement signals in the sensor planes as follows:

$$u_u = G_u \cdot F_u$$

Here, $G_u$ is the compliance matrix of the rotor with respect to the unbalance distribution, and $u_u$ is a vector of the unbalance displacement signals in the sensor planes. The unbalance displacement signals $u_u$ depend on rotational speed because $G_u$ depends on rotational speed.

In order to compensate for the unbalance, a vector $F_w$ of synchronous excitation forces is applied to the magnetic bearings in the bearing planes. The dimension of the vector $F_w$ corresponds to the number of bearing planes. The resulting rotor-synchronous displacement signals can then be expressed as:

$$u = u_u + G \cdot F_w$$

Here, $G$ is the compliance matrix of the rotor with respect to the bearing planes, including the position controller at the given rotational speed. The matrix $G$ can be measured, or it can be computed based on the rotor model in combination with the magnetic bearing controller.

Description of a possible unbalance controller

An adaptive algorithm can be used to determine $F_w$ in order to minimize the unbalance displacement signals $u_u$. An efficient way of doing this is by integrating as follows:

$$F_w = -k_i \int G^{-1} u \, dt$$

where $k_i$ is a positive real number that determines the speed of adaptation. It can easily be proven that this adaptation will converge to $u = 0$ as long as $G$ is invertible. Since $G$ depends on the rotation frequency, this adaptive algorithm should be adjusted to the actual rotation frequency.

It may happen that the amplitude of one of the components of $F_w$ that would be necessary to actually minimize the unbalance signal to zero exceeds the allowable maximum force amplitude. In this case, it may be necessary to reduce the rotation frequency and carry out the balancing operation at a lower rotation frequency. Alternatively, it may be possible to control the magnetic bearing device in such a manner that the unbalance signal is reduced only to a certain extent (e.g., 50% of their initial amplitude, in the previous example the magnitude of $F_w$ may be limited) rather than minimized, and to extrapolate the required correction masses based on the rotating force needed to achieve this reduction.

Determination of compliance matrix

Assuming that the system is linear, the compliance matrix $G$ can be determined as follows:

First, the response of the system to the unbalance (i.e., the complex-valued rotor-synchronous component of the displacement signals) is determined under the action of a rotor-synchronous force $F_w$ :

$$u_0 = u_u + G \cdot F_w$$

The rotor-synchronous force is then changed by a small amount $dF_{w1}$, and the response of the system to the changed force is determined:

$$u_1 = u_u + G \left( F_w + dF_{w1} \right)$$

The difference is calculated:

$$du_1 = u_1 - u_0 = G \cdot dF_{w1}$$

If the system has a single bearing plane and a single sensor plane, the complex quantity $G$ can be directly determined from this equation as

$$G = du_1 / dF_{w1}$$

In the case of multiple sensor planes and multiple bearing planes, $G$ is a matrix, and $u$ and $F_w$ are vectors. In this case, several measurements are carried out with force changes $dF_{w2}$, $dF_{w3}$ etc. in different bearing planes, and the responses are calculated:

$$du_2 = u_2 - u_0 = G \cdot dF_{w2}$$

$$du_3 = u_3 - u_0 = G \cdot dF_{w3}$$

In matrix form, this can be expressed as:

$$du = G \cdot dF_w$$

where $du$ and $dF_w$ are matrices as follows:

$$du = [du_1, du_2, du_3, \ldots]$$

$$dF_w = [dF_{w1}, dF_{w2}, dF_{w3}, \ldots]$$

If a sufficient number of measurements are made for different bearing planes, $dF_w$ will be invertible, or it will be possible to determine a pseudoinverse for $dF_w$. The matrix $G$ can then be determined as

$$G = du \cdot dF_w^{-1}$$

where $dF_w^{-1}$ is the (pseudo-) inverse of the matrix $dF_w$.

Determination of the amplitude of the rotating force

In the previous section it was assumed that the rotating force $F_w$ is directly measurable. However, in many real magnetic bearing systems, only the current, the position and sometimes the field are directly available.

In the following, several possibilities for determining the rotating force $F_w$ in such situations will be described with reference to Fig. 4. The preferred method will depend on the manner in which the electromagnets 3 are controlled.

If the electromagnets are B-field-controlled, the force exerted upon the rotor by any pair of opposing electromagnets can be determined by the following equation:

$$F = const1 \cdot (B_{pos}^2 - B_{neg}^2)$$

Here, $B_{pos}$ designates the magnetic field (to be precise, the magnetic flux density) of one of the electromagnets, and $B_{neg}$ designates the magnetic flux density of the opposing electromagnet.

If the electromagnets are current-controlled, the flux densities $B_{pos}$ and $B_{neg}$ can be determined from the currents $I_{pos}$ and $I_{neg}$ in the respective electromagnets and from the gap size $d = d_0 \pm x$:

$$B_{pos} = I_{pos}/(const2 \cdot (d_0 - x))$$

and

$$B_{neg} = I_{neg}/(const2 \cdot (d_0 + x))$$

Here, $d_0$ designates the nominal size of the gap between the electromagnet core and the rotor, and $x$ designates the rotor displacement from the nominal position along the gap direction. From the flux densities, the force can again be calculated.

If the electromagnets are force-controlled, the above calculations can be omitted.

In the above discussion, the terms "B-field controlled", "current-controlled" and "force-controlled" are to be understood as follows: Normally, cascaded control is employed for controlling the electromagnets, employing a position controller and an amplifier controller. The position controller outputs a control variable to the power amplifier, which is used by the amplifier controller as an input variable. The amplifier controller ensures that the received input variable is indeed attained by the electromagnets. A widely used scheme is current control, wherein the position controller outputs a current value, and wherein the controller of the power amplifier receives the current value as its input variable, controlling the power switches in the amplifier in such a manner that the received current value is attained. In such a scheme, the electromagnets are considered to be "current controlled".

Similarly, if the position controller outputs a value of the magnetic field (to be precise, the flux density $B$), and the amplifier is controlled in such a manner that the electromagnets generate this magnetic field value, the electromagnets are considered to be "B-field controlled". To this end, often magnetic field sensors are employed in the magnetic bearing for providing feedback about the actual magnetic field to the amplifier controller. In other embodiments, the magnetic field is determined indirectly by a so-called observer.

If the position controller outputs a force value, and the amplifier is controlled in such a manner that the electromagnets indeed generate said force, the electromagnets are considered to be "force controlled". The actual force is usually determined by an observer which determines the magnetic flux density $B$ in the gap by measuring the current $I$ through the coil of each electromagnet, the corresponding voltage $U$ across the same coil and the rotor displacement x, taking into account eddy currents, stray fields, magnetic remanence and the characteristic curve for the magnetization. Force is then calculated from the magnetic flux density.

Transformation into balancing planes

The correction masses cannot always be added or removed in the bearing planes. Instead, balancing planes may be present that do not coincide with the bearing planes. It may therefore be necessary to transform the rotor-synchronous rotating force vector $F_w$ into the balancing planes. This can be done by determining a balancing force vector $F_b$ in the balancing planes that cancels the action of the rotating force vector $F_w$ in the bearing planes, so as to correctly determine the correction masses. Corresponding transformation methods are well known to a person skilled in the art.

Mathematical description of the transformation

In general terms, the transformation from the bearing planes to the balancing planes can be described mathematically as follows. Above, the equation $u = u_u + G \cdot F_w$ was used, and a method for minimizing $u$ was presented. For $u \to 0$ the above equation leads to

$$F_w = -G^{-1} \cdot u_u$$

The balancing masses to be added in the balancing planes can then be determined as follows. The balancing masses give rise to balancing forces $F_b$ in the balancing planes. These additional forces $F_b$, give rise to a total rotor-synchronous displacement signal as follows:

$$u = u_u + G \cdot F_w + G_b \cdot F_b$$

The matrix $G_b$ is the response of the system to the balancing masses. $G_b$ can be determined by the same or similar methods as $G$. It also depends on rotational speed.
The goal now is to find a balancing force vector $F_b$ that minimizes $u$ and eliminates the need to generate the forces $F_w$.
For $u = 0$ and $F_w = 0$ we get:

$$u = 0 = u_u + G_b \cdot F_b$$

and

$$F_b = -G_b^{-1} \cdot u_u$$

Now we can express $u_u$ by the known optimum force vector $F_w$, using $F_w = -G^{-1} \cdot u_u$:

$$F_b = -G_b^{-1} \cdot G \cdot F_w$$

In order to actually balance the rotor, one or more correction masses are calculated. In particular, if a correction mass $m_{C,i}$ is to be added in each of the balancing planes $i$, the correction mass can be calculated as follows:

$$m_{C,i} = \left| F_{b,i} \right| / (r_i (2\pi f)^2)$$

Here, $|F_{b,i}|$ designates the absolute value (amplitude) of the force component for balancing plane $i$, $r_i$ designates the radius from the geometric center axis of the rotor at which correction mass $m_{C,i}$ is mounted, and $f$ designates the rotation frequency. The angular position of each correction mass along the circumference of the rotor is chosen according to the phase of $F_{b,i}$.
With this method the optimum balancing masses can be computed directly without an iterative process, provided that $G$ and $G_b$ are known, and that $G_b$ is invertible.
There are three cases where $G_b$ is not invertible:

a) If there is a different number of balancing planes available than bearing planes, $G_b$ is not a square matrix. In particular, if the number of balancing planes is smaller than the number of bearing planes, there are two options:

a1) Find a compromise. This is an optimization problem, and various methods are known to tackle this problem, e.g. by least-squares optimization, by using the pseudoinverse of $G_b$, or by an H-infinity approach which minimizes the peak unbalance response.
a2) Remove some bearing planes from the calculation in order to get a square matrix $G_b$ which is invertible.

b) If a balancing plane is located on a modal node of a bending mode, the corresponding bending mode cannot be influenced by this balancing plane. In that case $G_b^{-1}$ can become ill-conditioned. This means balancing is not possible at this speed, and a different speed should be selected. Usually the balancing planes are designed not to be at these locations.

c) If there are more balancing planes available than bearing planes, balancing may be done at different rotational speeds. Example: If a system has two bearing planes and three balancing planes, measurements at two rotor speeds can be made to balance both the rigid body mode and the first bending mode by using the all three balancing planes.

Dependence on rotation frequency

As already mentioned, if the rotor is not rigid, it may become necessary to take into account the bending modes. The first three bending modes 17, 18, 19 are illustrated in Fig. 5. As different bending modes are excited at different rotation frequencies, the required correction masses will become dependent on the rotation frequency.

In such cases, unbalance can be measured at various rotational speeds. Since $F_w$, $G$, $G_b$ and $u_u$ all depend on the angular velocity $\omega = 2\pi f$, the equation to determine $F_b$ can be expressed as:

$$F_b = -G_b^{-1}(\omega) \cdot G(\omega) \cdot F_w(\omega)$$

In that case $F_b$ is overdetermined. This leads again to an optimization problem, which can be solved as discussed above in connection with option a1). The optimization goal is to find a force vector $F_b$ that minimizes the unbalance position signal

$$u(\omega) = u_u(\omega) + G_b(\omega) \cdot F_b$$

for all considered values of $\omega$.

In more general terms, unbalance can be measured at various operating conditions, and the optimization will then extend over all operating conditions for which measurements have been carried out.

Temperature effects

As illustrated in Fig. 1, the housing 2 may be filled with a gas, in particular, air. In this case, the rotating rotor 1 will cause a circular gas flow 4 in the annular space between the rotor 1 and the housing 2. The flow causes dissipative heat which heats up the gas. If the rotor describes an orbit about the rotation axis A due to its unbalance, the flow velocity, the gas pressure and, in consequence, also the gas temperature will be unevenly distributed along the circumference of the rotor, the distribution of the gas temperature rotating about the rotation axis A together with the rotor. This, in turn, will cause an uneven temperature distribution on the rotor surface along the circumference of the rotor.

The temperature distribution on the rotor surface is further influenced by hysteresis losses in the electromagnets of the magnetic bearings and of the motor. These losses are larger where the gap between the electromagnet and the rotor surface is small. Therefore, in the presence of unbalance, one side of the rotor is heated more strongly than the other side by the hysteresis losses.

An uneven temperature distribution along the circumference of the rotor may lead to bending deformations of the geometric axis of the rotor. Such deformations in turn may affect the unbalance in various ways. On the one hand, the deformations may directly cause additional unbalance. On the other hand, such deformations may cause additional undesired effects. For instance, a bending deformation may cause the thrust disk of the axial bearing to slightly tilt away from the rotation axis, causing uneven gas flow in the axial bearing. This again may cause additional rotation-synchronous forces in the radial bearings.

Therefore, the initial unbalance, the resulting temperature distribution along the circumference of the rotor, the resulting rotor deformations and the resulting unbalance are closely interrelated, influencing each other in a complex manner.

The presently proposed balancing scheme minimizes or at least reduces such influences by minimizing or at least reducing the orbit of the geometric center axis of the rotor about the rotation axis. By minimizing the orbit, the temperature distribution along the circumference will be equalized, and resulting deformations will be minimized.

Balancing in stationary state

As the system can require a long time to thermalize, the above-described temperature effects will generally take a certain time to develop and reach a stationary state. In some circumstances, it is desirable to carry out the balancing operation in a state where a stationary temperature distribution has been reached. Figure 6 illustrates, in a highly schematic manner, a typical time dependence of signals 81, 82 that are indicative of the rotating force vector $F_w$ for a rotor driven by an induction motor. The signals have a periodic component originating from the slip of the induction motor. In addition, the signals have a slowly time-dependent component that exponentially converges towards stationary values $F_{w1}$ and $F_{w2}$, respectively. The slowly converging component is believed to be primarily due to temperature effects. By observing the time dependence of the signals 81, 82 for a limited amount of time, the stationary values $F_{w1}$ and $F_{w2}$ can be readily extrapolated, and the characteristics of the rotating force in a stationary state can be estimated from the extrapolated stationary values $F_{w1}$ and $F_{w2}$. This greatly improves the accuracy of the balancing operation.

Flow diagram of balancing method

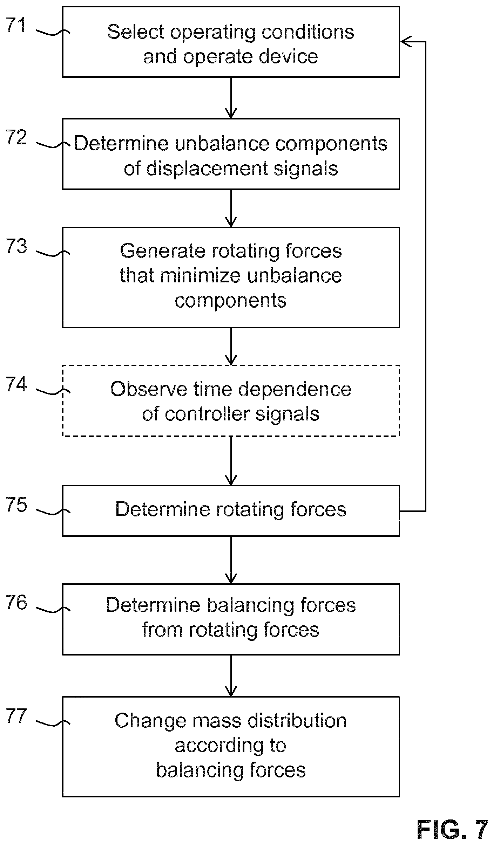

An embodiment of the above-described method is illustrated in Fig. 7. The method may be implemented, e.g., in a magnetic bearing device as schematically illustrated in Fig. 5. In step 71, a particular set of operating conditions (e.g., rotation frequency, motor power, gas pressure, ambient temperature etc.) is selected, and the magnetic bearing device is operated at the selected operating conditions. In step 72, displacement signals are determined in the sensor planes 15, and the unbalance components of the displacement signals in the sensor planes are determined. In step 73, the electromagnets in the bearing planes are operated so as to generate rotor-synchronous rotating radial forces that simultaneously minimize the unbalance components in all sensor planes. In optional step 74, controller signals that are indicative of the rotating forces are monitored for a certain amount of time, and stationary values of the rotating forces are estimated from the time dependence of the controller signals. For instance, if the controller implements direct force control, the values of the rotating forces calculated by the controller may be monitored in all bearing planes for a certain amount of time, and stationary-state values of these forces may be estimated from these observations. For determining unbalance in transient situations, e.g., under conditions that emulate a situation during run-up of the rotor up to its nominal rotational frequency, step 74 may be omitted. In step 75, the characteristics (e.g., amplitude and phase) of each rotating force are determined. The previous steps are repeated for different sets of operation conditions, e.g., various rotational frequencies, motor powers, gas pressures, ambient temperatures etc. In step 76, balancing forces that minimize the rotating forces are determined in the appropriate balancing planes, and the corresponding correction masses are calculated. In step 77, the appropriate correction masses are added, removed or displaced in the balancing planes to actually balance the rotor.

While the invention has been described with reference to exemplary embodiments, it is to be understood that the invention is not limited to these embodiments, and that various modifications are possible without leaving the scope of the present invention. In particular, as was shown above, the proposed method is applicable for an arbitrary number of bearing planes and balancing planes.

LIST OF REFERENCE SIGNS

| 1 | rotor | 4 | gas flow |
|----|----|----|----|
| 11 | additional mass | 5 | displacement sensor |
| 12 | orbit | 6 | controller |
| 13 | correction mass | 71-77 | steps |
| 14 | bearing plane | 81 | unbalance signal |
| 15 | sensor plane | 82 | unbalance signal |
| 16 | balancing plane | | |
| 17 | first bending mode | A | rotation axis |
| 18 | second bending mode | B | flux density |
| 19 | third bending mode | I | coil current |
| 2 | housing | U | voltage across coil |
| 3 | electromagnet | d | gap size |
| 31 | core | $F_{w1}$ | rotating force |
| 32 | coil | $F_{w1}, F_{w2}$ | stationary values |
| 33 | magnetic flux | | |

**Claims**

1.  A method of balancing a rotor (1) that is supported for rotation around a rotation axis (A) in a contactless manner by an active magnetic bearing device comprising a plurality of electromagnets (3), the method comprising:

(a) rotating the rotor (1) in the magnetic bearing device at a rotation frequency;

(b) determining displacement signals for the rotating rotor (1) in at least one sensor plane;

(c) operating the electromagnets (3) of the magnetic bearing device to generate a rotor-synchronous rotating force ($F_w$) in at least one bearing plane in such a manner that the rotor-synchronous rotating force ($F_w$) reduces a rotor-synchronous component of the displacement signals;

(d) based on operating parameters of the magnetic bearing device, determining characteristics of the rotor-synchronous rotating force ($F_w$); and

(e) based on the characteristics of the rotating force ($F_w$), determining a change of mass distribution of the rotor (1) so as to improve balancing of the rotor (1).

2. The method of claim 1, wherein steps (a)-(d) are repeated at a plurality of operating conditions, and wherein the change of mass distribution of the rotor (1) is determined based on the characteristics of the rotating force ($F_w$) at the plurality of operating conditions.

3. The method of claim 1 or 2, wherein in step (c) the electromagnets (3) of the magnetic bearing device are operated in such a manner that the rotor-synchronous component of the displacement signals is minimized.

4. The method of any one of the preceding claims, further comprising:

(d1) observing a time dependence of at least one operation parameter of the magnetic bearing device, the operation parameter being indicative of the rotating force ($F_w$), and, based on the time dependence, estimating characteristics of the rotating force ($F_w$) in a stationary state,

wherein the change of mass distribution of the rotor in step (e) is based on the estimated characteristics of the rotating force ($F_w$) in the stationary state.

5. The method of any one of the preceding claims, wherein step (e) comprises:

(e1) determining a balancing force ($F_b$) in at least one balancing plane based on the rotating force ($F_w$) in the at least one bearing plane,

wherein the change of mass distribution of the rotor (1) is based on the balancing force ($F_b$) in the at least one balancing plane.

6. The method of any one of the preceding claims, wherein the characteristics of the rotating force ($F_w$) are determined taking into account at least one of the following:

(i) flux densities ($B$) generated by the electromagnets (3);

(ii) currents ($I$) through the electromagnets (3); and

(iii) the displacement signals for the rotating rotor (1).

7. The method of any one of the preceding claims, wherein the determination of a change of mass distribution in step (e) includes at least one of

(i) determining an amount and location of material to be added to the rotor;

(ii) determining an amount and location of material to be removed from the rotor; and

(iii) determining an amount and location of material to be displaced on the rotor; and

(iv) determining an amount and location of deformation of the rotor.

8. The method of any one of the preceding claims, further comprising:

(f) changing the mass distribution according to the determination in step (e).

9. An active magnetic bearing device comprising a plurality of electromagnets (3) and a controller (6) for generating control currents through the electromagnets (3), the controller (6) being configured to carry out a method as claimed in any one of claims 1-7.

FIG. 1

FIG. 2

FIG. 3

FIG. 4

**FIG. 5**

**FIG. 6**

71 — Select operating conditions and operate device

72 — Determine unbalance components of displacement signals

73 — Generate rotating forces that minimize unbalance components

74 — Observe time dependence of controller signals

75 — Determine rotating forces

76 — Determine balancing forces from rotating forces

77 — Change mass distribution according to balancing forces

FIG. 7

Europäisches
Patentamt

European
Patent Office

Office européen
des brevets

# EUROPEAN SEARCH REPORT

Application Number

EP 17 19 5470

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 179 611 A1 (SKF MAGNETIC MECHATRONICS [FR]) 14 June 2017 (2017-06-14) * paragraphs [0002], [0010], [0012], [0013] - [0019], [0051], [0052], [0058] - [0060], [0062], [0064], [0069], [0070] * | 1-9 | INV. F16F15/00 F16F15/32 F16C32/04 G01M1/22 |
| X<br>A | US 6 005 315 A (CHAPMAN JOHN H [US]) 21 December 1999 (1999-12-21) * column 4, lines 1-5 * * column 5, lines 13-22, 50-55 * * column 6, lines 12-15,18-28,31-41 * * figure 2 * | 1,3,6-9<br>2,4,5 | |
| X | WO 2012/084455 A1 (SIEMENS AG [DE]; BACHMAIER GEORG [DE]; GOEDECKE ANDREAS [DE]; MOCK RAN) 28 June 2012 (2012-06-28) * page 1, lines 3-4 * * page 2, lines 13-14,19-22 * * page 6, line 34 - page 7, lines 37,13-20 * * page 13, lines 27-29 * * claims 1-2 * | 1-9 | |

TECHNICAL FIELDS
SEARCHED      (IPC)

F16F
F16C
G01M

The present search report has been drawn up for all claims

| Place of search | Date of completion of the search | Examiner |
|---|---|---|
| The Hague | 12 April 2018 | Blazquez Lainez, R |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 19 5470

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2018

| Patent document cited in search report | | Publication date | Patent family member(s) | | Publication date |
|---|---|---|---|---|---|
| EP 3179611 | A1 | 14-06-2017 | CA | 2940964 A1 | 10-06-2017 |
| | | | CN | 106870634 A | 20-06-2017 |
| | | | EP | 3179611 A1 | 14-06-2017 |
| | | | JP | 2017106898 A | 15-06-2017 |
| | | | US | 2017167943 A1 | 15-06-2017 |
| US 6005315 | A | 21-12-1999 | DE | 881404 T1 | 06-05-1999 |
| | | | EP | 0881404 A2 | 02-12-1998 |
| | | | JP | 3333739 B2 | 15-10-2002 |
| | | | JP | H10331851 A | 15-12-1998 |
| | | | US | 5925957 A | 20-07-1999 |
| | | | US | 6005315 A | 21-12-1999 |
| WO 2012084455 | A1 | 28-06-2012 | DE | 102010063812 A1 | 21-06-2012 |
| | | | WO | 2012084455 A1 | 28-06-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102010063812 A1
- DE 4227014 A1

- WO 2006010285 A1

**Non-patent literature cited in the description**

- Magnetic Bearings - Theory, Design and Application to Rotating Machinery. 2009